Europäisches Patentamt

European Patent Office

Office européen des brevets

(11) Veröffentlichungsnummer: **0 142 460**
**B 1**

(12) # EUROPÄISCHE PATENTSCHRIFT

(45) Veröffentlichungstag der Patentschrift:
16.09.87

(51) Int. Cl.⁴: **C 22 F 1/04**, B 21 B 3/00, H 01 G 9/04

(21) Anmeldenummer: 84810371.9

(22) Anmeldetag: 26.07.84

(54) Verfahren zur Herstellung von Aluminiumdünnband und-Folien mit hohem Würfeltexturanteil.

(30) Priorität: 25.08.83 CH 4634/83

(43) Veröffentlichungstag der Anmeldung:
22.05.85 Patentblatt 85/21

(45) Bekanntmachung des Hinweises auf die Patenterteilung:
16.09.87 Patentblatt 87/38

(84) Benannte Vertragsstaaten:
CH DE FR GB IT LI NL

(56) Entgegenhaltungen:
CH - A - 398 796
DE - A - 2 804 573
DE - B - 1 109 380
DE - B - 1 110 492
DE - B - 1 184 969
FR - A - 2 508 697
US - A - 4 000 009

(73) Patentinhaber: SCHWEIZERISCHE ALUMINIUM AG,
CH-3965 Chippis (CH)

(72) Erfinder: Rodrigues, Pedro, Villenstrasse 35,
CH-8200 Schaffhausen (CH)
Erfinder: Bichsel, Heinz, Tannenstrasse 18,
CH-8212 Neuhausen (CH)
Erfinder: Wehner, Frank, Kreuzstrasse 7b,
D-7703 Rielasingen-Worblingen 2 (DE)

**Beschreibung**

Die Erfindung betrifft ein Verfahren zur Herstellung eines Dünnbandes oder einer Folie aus Aluminium, welche(s) nach einer rekristallisierenden Endglühung vorwiegend Würfeltextur aufweist.

Bei Aluminium trifft oftmals die Würfellage als Komponente der Rekristallisationstextur auf. Ihr Anteil steht jedoch in erheblicher Abhängigkeit von Verunreinigungen oder Legierungselementen, Walz- und Glühprocedere, sowie Dicke des Dünnbandes bzw. der Folie.

Zur Erzielung möglichst hoher Anteile der Würfellage bei Folien oder Bändern mit einer Dicke von weniger als 0,2 mm wurde vorgeschlagen, das Metall nach dem Warmwalzen kalt auf die 1,05 bis 1,35fache Enddicke zu walzen, wobei die Warmwalzenddicke mindestens das 11fache dieser Zwischendicke sein soll. Bei der Zwischendicke sei das Metall bei Temperaturen zwischen 180 und 350°C zu glühen und anschliessend kalt auf Enddicke zu walzen. Bei der Enddicke erfolgt eine rekristallisierende Glühung bei Temperaturen zwischen 300 und 650°C.

Als Resultat werden bei Aluminium von 99,993% Reinheit Würfeltexturanteile von 45 bis 95% angegeben. Bei Aluminium von 99,96% Reinheit wird ein Anteil von 70% berichtet.

Der wesentliche Punkt dieses Verfahrens, der geringe Abwalzgrad von der Zwischenglühdicke zur Enddicke, erhöht jedoch den Fertigungsaufwand in bedeutendem Masse.

Deshalb haben sich die Erfinder die Aufgabe gestellt, ein Verfahren zur Erzeugung hoher Würfeltexturanteile bei Aluminiumdünnband und -Folien zu schaffen, welches mit geringerem Aufwand ähnliche oder noch bessere Resultate liefert.

Erfindungsgemäss wird die Aufgabe dadurch gelöst, dass Aluminium von mindestens 99,9% Reinheit nach dem Giessen fallweise bei höchstens 430°C während höchstens 12 Stunden geglüht wird, bei Temperaturen zwischen 20 und 420°C auf Enddicke gewalzt wird, wobei ab mindestens 8facher Enddicke keine Zwischenglühungen mehr erfolgen, bei Temperaturen von höchstens 250°C gewalzt und bei Temperaturen zwischen 480 und 640°C eine rekristallisierende Endglühung durchgeführt wird.

Die Verbindung von tiefen Warmwalztemperaturen mit zwischenglühfreiem Kaltwalzen ab zumindest 8facher Enddicke führt bei Aluminium mit höchstens 0,1% Frembestandteilen nach einer rekristallisierenden Endglühung bei Temperaturen zwischen 480 und 640°C zu sehr hohen Würfeltexturanteilen. Dabei ist es wesentlich, das beim Fertigwalzen mindestens ab 8facher Enddicke, das Band nie zu hohe Temperaturen erreicht; 250°C dürfen auf keinen Fall überschritten werden.

Bei Verwendung von Giesswalzverfahren kann das Warmwalzen weggelassen werden.

Es hat sich als vorteilhaft erwiesen, nach dem Giessen, vor dem Walzen, beim Einsatz von Barren-Strangguss, eine Glühung einzuschalten, welche jedoch bei einer Höchsttemperatur von 430°C nicht länger als 12 Stunden dauern darf.

Eine zweckmässige Ausgestaltung des erfindungsgemässen Verfahrens beinhaltet die Verwendung einer Bandgiessanlage mit umlaufenden Raupen-Kokillen (beispielsweise vom Typ ALUSUISSE CASTER II) oder Giessbändern (beispielsweise vom Typ Hazelett). Hierbei werden die 12 bis 25 mm dicken Gussbänder bei mindestens 200°C warmgewalzt, wobei auch hier keine Temperaturen über 420°C auftreten dürfen.

Auch die Verwendung einer Giesswalzmaschine (beispielsweise vom Typ ALUSUISSE CASTER I) eignet sich vorzüglich zur Lösung der gestellten Aufgabe.

Die Versuche zeigten, dass man mit Vorteil die Endglühtemperatur auf einen Bereich zwischen 520 und 600°C und die Glühdauer auf einen solchen von 1/2 bis 12 Stunden beschränkt.

Besonders hohe Würfeltexturanteile entstehen, wenn das fertiggewalzte Band nicht zu rasch auf Endglühtemperatur gebracht wird. Aufheizraten von mehr als 500 K/h sollten vermieden werden.

Solch hohe Würfeltexturanteile werden mit noch grösserer Sicherheit erreicht, schaltet man nach dem Fertigwalzen, von der Endglühung eine Vorglühung bei Temperaturen zwischen 120 und 300°C ein. Die Behandlungsdauer soll dabei 30 Stunden nicht überschreiten.

Besonders zweckmässig ist die Verwendung eines Werkstoffes mit höchstens 200 ppm nicht-Aluminium-Anteil.

Vorzüglich eignen sich erfindungsgemäss hergestellte Folien oder ggf. Dünnbänder zur Fertigung von Anoden für Elektrolytkondensatoren. Ein hoher Würfeltexturanteil ist eine wichtige Voraussetzung für eine hochgradige Ausbildung von Tunneln bei der Hochvoltätzung. Eine solche Tunnelätzung wiederum erhöht die Kapazität von aus derartigen Produkten hergestellten Elektrolyt-Kondensatoren, ohne die mechanische Belastbarkeit der Folie übermässig zu beeinträchtigen.

Weitere Vorteile, Merkmale und Einzelheiten der Erfindung ergeben sich aus der nachfolgenden Beschreibung bevorzugter Ausführungsbeispiele.

*Beispiel 1*

Reinstaluminium, enthaltend 26 ppm Si, 20 ppm Fe, 35 ppm Cu und weniger als 10 ppm weitere Elemente, wurde mittels Strangguss zu Barren vergossen. Nach einer Barrenanwärmung auf 400°C wurde mit einer gleichhohen Starttemperatur warm auf 10 mm gewalzt, wobei die Temperatur auf 350°C fiel; danach wurde die Platte in Wasser abgekühlt.

Ohne Zwischenglühung wurde das Band auf 0,14 mm kaltgewalzt. Mit einer Aufheizrate von 60°C/h erreichte man die Endglühtemperatur von 570°C; diese Temperatur wurde über 2 Stunden gehalten.

Der Anteil der Würfellage an der Textur des Dünnbandes bewegte sich bei den verschiedenen Proben zwischen 85 und über 95%.

*Beispiel 2*

Das kaltgewalzte 0,14 mm-Band aus Beispiel 1 wurde während 18 Stunden einer Vorglühung bei 230°C unterworfen. Anschliessend folgte die gleiche Endglühung wie in Beispiel 1.

Alle Proben wiesen einen Würfeltexturanteil von über 95% auf.

### Beispiel 3

Analog zu Beispiel 2 wurde eine Vorglühung durchgeführt. Dabei betrug die höchste Temperatur jedoch 320°C.

In den Proben konnte Grobkorn beobachtet werden, und der Würfeltexturanteil lag lediglich zwischen 30 und 40%.

### Beispiel 4

Reinstaluminium, enthaltend 22 ppm Si, 20 ppm Fe, 37 ppm Cu und weniger als 10 ppm weitere Elemente wurde mittels Strangguss zu Barren vergossen. Nach einer 10stündigen Barrenanwärmung bei 570°C wurde auf 400°C abgekühlt, auf 10 mm warmgewalzt und von der Endtemperatur, 355°C, in Wasser abgekühlt. Ohne Zwischenglühungen wurde das Band auf 0,145 mm kaltgewalzt.

Die Endglühung wurde wie in Beispiel 1 durchgeführt, der Anteil an Würfellage betrug jedoch nur 30 bis 40%.

Dies ist auf die zu hohe Barrenanwärmung zurückzuführen.

### Patentansprüche

1. Verfahren zur Herstellung eines Dünnbandes oder einer Folie aus Aluminium mit vorwiegender Würfeltextur durch Giessen von Aluminium von mindestens 99,9% Reinheit, fallweise Glühen bei höchstens 430°C während höchstens 12 Stunden, Walzen bei Temperaturen zwischen 20 und 420°C auf Enddicke, wobei ab 8facher Enddicke ohne Zwischenglühungen bei Temperaturen von höchstens 250°C gewalzt wird und rekristallisierendes Endglühen bei Temperaturen zwischen 480 und 640°C.

2. Verfahren nach Anspruch 1, dadurch gekennzeichnet, dass das Aluminium mittels einer Bandgiessmaschine mit umlaufenden Raupenkokillen oder Giessbändern vergossen, bei Temperaturen zwischen 200 und 420°C warmgewalzt und danach bei Temperaturen von höchstens 250°C auf Enddicke gewalzt wird.

3. Verfahren nach Anspruch 1, dadurch gekennzeichnet, dass das Aluminium zwischen zwei Walzen vergossen und anschliessend bei Temperaturen von höchstens 250°C auf Enddicke gewalzt wird.

4. Verfahren nach wenigstens einem der Ansprüche 1 bis 3, dadurch gekennzeichnet, dass die Endglühung bei Temperaturen zwischen 520 und 600°C während 1/2 bis 12 Stunden durchgeführt wird.

5. Verfahren nach wenigstens einem der Ansprüche 1 bis 4, dadurch gekennzeichnet, dass die Aufheizrate zur Endglühung weniger als 500 K/h beträgt.

6. Verfahren nach wenigstens einem der Ansprüche 1 bis 4, dadurch gekennzeichnet, das das Dünnband oder die Folie bei Enddicke, vor der Endglühung, bei Temperaturen zwischen 120 und 300°C während höchstens 30 Stunden geglüht wird.

7. Verfahren nach wenigstens einem der Ansprüche 1 bis 6, dadurch gekennzeichnet, dass Aluminium mit einem Reinheitsgrad von mindestens 99,98% verwendet wird.

8. Verwendung eines Dünnbandes oder einer Folie aus Aluminium, hergestellt nach dem Verfahren gemäss wenigstens einem der Ansprüche 1 bis 7, zur Fertigung von Elektrolytkondensator-Anoden.

### Claims

1. A method of production of a thin strip or a foil from aluminium with a preponderant cube texture through casting of aluminium of at least 99.9% purity, from case to case annealing at at most 430°C for at most 12 hours, rolling at temperatures between 20 and 420°C down to final thickness, rolling being affected from 8 times final thickness without intermediate annealing at temperatures of at most 250°C, and final recrystallizing annealing at temperatures between 480 and 640°C.

2. A method as in claim 1, characterised in that the aluminium is cast by means of a strip-casting machine having circulating caterpillar chillmoulds or casting belts, hot-rolled at temperatures between 200 and 420°C and after that rolled down to final thickness at temperatures of at most 250°C.

3. A method as in claim 1, characterised in that the aluminium is cast between two rolls and subsequently rolled down to final thickness at temperatures of at most 250°C.

4. A method as in at least one of the claims 1 to 3, characterised in that the final annealing is performed at temperatures between 520 and 600°C for 1/2 to 12 hours.

5. A method as in at least one of the claims 1 to 4, characterised in that the rate of heating up for the final annealing amounts to less than 500 K/h.

6. A method as in at least one of the claims 1 to 4, characterised in that the thin strip or the foil at final thickness is annealed before the final annealing, at temperatures between 120 and 300°C for at most 30 hours.

7. A method as in at least one of the claims 1 to 6, characterised in that the aluminium employed is of a degree of purity of at least 99.98%.

8. The employment of a thin strip or a foil of aluminium produced according to the method in accordance with at least one of the claims 1 to 7, for the manufacture of electrolytic capacitor anodes.

### Revendications

1. Procédé pour réaliser une mince bande ou feuille d'aluminium ayant une texture cubique prédominante, cela par coulée d'aluminium ayant une pureté d'au moins 99,9%, par recuit éventuel, selon le cas individuel, à tout au plus 430°C pendant 12 heures au maximum, par laminage à épaisseur finale, à des températures comprises entre 20 et 420°C, ce laminage étant, à partir de huit fois l'épaisseur finale, réalisé à des températures de 250°C au maximum, sans recuits intermédiaires, puis par recuit final de recristallisation à des températures comprises entre 480 et 640°C.

2. Procédé selon revendication 1, caractérisé par le fait que l'aluminium est coulé au moyen d'une machine de coulée en bande avec coquilles opérant cycliquement ou bandes de coulée, laminé à chaud à des températures comprises entre 200 et 420°C, après quoi il est laminé à l'épaisseur finale à des températures ne dépassant pas 250°C.

3. Procédé selon revendication 1, caractérisé en ce que l'aluminium est coulé entre deux cylindres, après quoi il est laminé, sous des températures ne dépassant pas 250°C, à l'épaisseur finale.

4. Procédé selon au moins l'une des revendications 1 à 3, caractérisé par le fait que le recuit final est effectué à des températures comprises entre 520 et 600°C, pendant 1/2 h à 12 heures.

5. Procédé selon au moins l'une des revendications 1 à 4, caractérisé en ce que la vitesse de montée en température pour le recuit final vaut moins de 500 K/h.

6. Procédé selon au moins l'une des revendications 1 à 4, caractérisé par le fait que la bande mince ou la feuille, lorsqu'elle est à son épaisseur finale, est soumise, avant le recuit final, à un recuit pendant 30 heures au maximum à des températures comprises entre 120 et 300°C.

7. Procédé selon au moins l'une des revendications 1 à 6, caractérisé par le fait que l'aluminium utilisé possède un degré de pureté d'au moins 99,98%.

8. Utilisation d'une bande mince ou d'une feuille en aluminium réalisée par le procédé selon au moins l'une des revendications 1 à 7, pour la fabrication d'anodes de condensateurs électrolytiques.